# EUROPEAN PATENT APPLICATION

(11) **EP 4 683 104 A1**
(43) Date of publication of application: **21.01.2026**
(21) Application number: 24878450.6
(22) Date of filing: 15.05.2024
(51) Int. Cl.: H01M 50/593, H01M 50/531

(54) **BATTERY CELL, BATTERY, AND ELECTRIC DEVICE**

(30) Priority: 18.10.2023 CN 202311350338
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN)
(74) Representative: Ziebig Hengelhaupt Intellectual Property Attorneys Patentanwaltskanzlei PartGmbB
(86) International application number: PCT/CN2024/093341
(87) International publication number: WO 2025/081797

(57) **Abstract**

A battery cell, a battery, and a power consuming apparatus are provided. A battery cell (61) includes: an electrode assembly (10), including a main body portion (11) and a tab (12), where the tab (12) is led from at least one end that is of the main body portion (11) and that is in a first direction (dr1); a shell (20), having a cavity that accommodates the electrode assembly (10), where the shell (20) includes a housing (21) and a top cover plate (22), at least one end that is of the housing (21) and that is in the first direction (dr1) has an opening portion (21a), the top cover plate (22) covers the opening portion (21a), and the tab (12) is electrically connected to the top cover plate (22); and an insulating portion (30), at least partially disposed at the opening portion (21a), and including a first insulating part (31) located between the opening portion (21a) and the top cover plate (22).

## Description

### CROSS-REFERENCE TO RELATED APPLICATIONS

The present application is based on, and claims priority to, Chinese Patent Application No. 202311350338.5, filed on October 18, 2023, which is incorporated herein by reference in its entirety.

### TECHNICAL FIELD

The present disclosure relates to the field of battery technologies, and in particular, to a battery cell, a battery, and a power consuming apparatus.

### BACKGROUND

As environmental pollution increasingly deteriorates, people increasingly concern about a new energy industry. In the new energy industry, battery technologies are an important factor related to development of the new energy industry.

A rechargeable battery cell, which may be referred to as a secondary battery cell, is a battery cell that can activate an active material through charging after the battery cell is discharged, to continue to use the battery cell. The rechargeable battery cell is widely used in electronic devices, for example, a mobile phone, a notebook computer, an electric scooter, an electric automobile, an electric aircraft, an electric boat, an electric toy automobile, an electric toy boat, an electric toy plane, and an electric tool. One of current research focuses is to further improve performance of the battery cell.

### SUMMARY

According to an aspect of the present disclosure, a battery cell is provided, including: an electrode assembly, including a main body portion and a tab, where the tab is led from at least one end that is of the main body portion and that is in a first direction; a shell, having a cavity that accommodates the electrode assembly, where the shell includes a housing and a top cover plate, at least one end that is of the housing and that is in the first direction has an opening portion, the top cover plate covers the opening portion, and the tab is electrically connected to the top cover plate; and an insulating portion, at least partially disposed at the opening portion, and including a first insulating part located between the opening portion and the top cover plate.

The top cover plate may serve as an electrode lead-out portion with an integrally formed structure, to be electrically connected to an electrode plate and an external conductor, so that the electrode lead-out portion obtains a larger electrical connection area, reduces an internal resistance, has a simpler structure, and occupies few space, to facilitate further improving a battery level, thereby improving performance of the battery cell. The first insulating part of the insulating portion is disposed between the opening portion of the housing and the top cover plate, so that an insulation and isolation effect between the opening portion and the top cover plate can be achieved, to avoid a short circuit between the top cover plate and the housing, thereby improving reliability of the battery cell.

In some embodiments, the opening portion includes a bent structure. The bent structure has a retaining cavity configured to retain a peripheral outer edge of the top cover plate. The first insulating part covers a surface of the retaining cavity.

The opening portion having the bent structure may obtain, through a bending craft, the retaining cavity configured to retain the peripheral outer edge of the top cover plate. Forming is convenient, and the bent structure has high strength and rigidity, to facilitate a reliable retaining effect for the top cover plate. The first insulating part covers the surface of the retaining cavity, so that reliable insulation and isolation between the opening portion and the top cover plate can be ensured when the opening portion can have the reliable retaining effect for the top cover plate.

In some embodiments, the first insulating part is continuously disposed on the surface of the retaining cavity along a peripheral direction of the top cover plate.

The first insulating part is continuously disposed on the surface of the retaining cavity along the peripheral direction of the top cover plate, so that the peripheral outer edge of the top cover plate and the opening portion can form the first insulating part that is continuously closed in the peripheral direction, thereby further improving an insulation and isolation impact, and also facilitating disposition of the first insulating part at the opening portion.

In some embodiments, the bent structure has an opening end surface located on a side that is of the retaining cavity and that is away from the electrode assembly. The insulating portion further includes a second insulating part covering the opening end surface.

In consideration of that the opening end surface of the bent structure is adjacent to the external conductor when the top cover plate of the battery cell serves as the electrode lead-out portion to be connected to the external conductor of the battery cell (for example, connected to another battery cell by using a bus member), insulation and protection for the opening end surface are implemented by using the second insulating part covering the opening end surface, so that the opening end surface can be insulated and isolated from the external conductor in the first direction, to reduce a risk of a short circuit caused when the external conductor connected to the top cover plate is conducted to the opening end surface, and improve the reliability of the battery cell.

In some embodiments, a minimum distance L1 between the opening end surface and the main body portion in the first direction is greater than a maximum distance L2 between the top cover plate and the main body portion in the first direction.

In the first direction, the minimum distance L1 between the opening end surface and the main body portion is greater than the maximum distance L2 between the top cover plate and the main body portion, so that the top cover plate is recessed relative to the opening end surface. This structure may be conveniently formed by using a flange of the bent structure, and a more simplified structure of the top cover plate, for example, a plate-like structure that is of the top cover plate and that has a uniform thickness, may be used. In addition, the opening end surface protruding upward relative to the top cover plate is protected by the second insulating part, so that the risk of the short circuit caused by conduction to the external conductor connected to the top cover plate is reduced, and the reliability of the battery cell is improved.

In some embodiments, there is a transition end surface between the opening end surface and an inner wall surface of the retaining cavity. The insulating portion further includes a third insulating part covering a surface of the transition end surface. The first insulating part, the third insulating part, and the second insulating part are continuously connected.

In consideration of that the bent structure of the opening portion has a thickness, between the opening end surface and the surface of the retaining cavity, there is the transition end surface corresponding to a wall thickness of the bent structure. The third insulating part covers the transition end surface, so that a risk of a short circuit caused when the external conductor (for example, a bus member) that is of the battery cell and that is connected to the top cover plate is conducted to the opening portion through a transition segment can be reduced. In addition, the first insulating part, the third insulating part, and the second insulating part are continuously connected, so that disposition of the first insulating part, the third insulating part, and the second insulating part at the opening portion can be convenient, and processing difficulty is reduced.

In some embodiments, the insulating portion further includes a fourth insulating part covering an outer side surface of the bent structure in the peripheral direction, and the fourth insulating part and the second insulating part are continuously connected in the first direction.

For an inner side and an outer side of the housing of the battery cell, the fourth insulating part covers the outer side surface of the bent structure in the peripheral direction, so that a risk of a short circuit caused when the external conductor (for example, a bus member) that is of the battery cell and that is connected to the top cover plate is conducted to the opening portion through the outer side surface of the bent structure can be reduced. In addition, the fourth insulating part and the second insulating part are continuously connected, so that disposition of the fourth insulating part and the second insulating part at the opening portion can be convenient, and the processing difficulty is reduced.

In some embodiments, the bent structure includes: a recessed segment, recessed relative to a peripheral outer surface of the housing, to form, on an inner side of the housing, a step surface supporting the top cover plate in the first direction; and a flange segment, connected to the recessed segment, and extending toward the inner side of the housing relative to the peripheral outer surface of the housing, to enclose the retaining cavity with the step surface. The insulating portion further includes a fifth insulating part covering a surface of a region that is of an inner wall of the housing and that is adjacent to the recessed segment.

The step surface supporting the top cover plate is formed by using the recessed segment of the bent structure, and cooperates with the flange segment to together define a position of the top cover plate in the first direction, so that a reliable retaining effect of the bent structure for the top cover plate at the opening portion can be achieved, to facilitate improving sealing of a position at which the top cover plate is mounted. In addition, the fifth insulating part is disposed on the surface of the region that is of the inner wall of the housing and that is adjacent to the recessed segment, so that the housing can be insulated and isolated from the electrode assembly by using the fifth insulating part, a risk of a short circuit between the electrode assembly and the housing is reduced, and the reliability of the battery cell is improved.

In some embodiments, the insulating portion further includes a sixth insulating part located between the fifth insulating part and the first insulating part, and the sixth insulating part is separately continuously connected to the fifth insulating part and the first insulating part on a surface of the recessed segment.

The sixth insulating part covering the surface of the recessed segment is continuously disposed between the fifth insulating part and the first insulating part, so that insulation and isolation can be formed between the electrode assembly and the recessed segment, thereby reducing a risk of a short circuit between the electrode assembly and the recessed segment of the bent structure, and improving the reliability of the battery cell.

In some embodiments, a maximum distance L3 between the region covered by the fifth insulating part on the inner wall of the housing and the top cover plate in the first direction is greater than a minimum distance L4 between the main body portion and the top cover plate in the first direction.

The maximum distance L3 between the region covered by the fifth insulating part on the inner wall of the housing and the top cover plate in the first direction can reflect a range covered by the fifth insulating part on the inner wall of the housing in the first direction. If the maximum distance L3 is large, the fifth insulating part covers a large range on the inner wall of the housing in the first direction. The maximum distance L3 is greater than the minimum distance L4 between the main body portion and the top cover plate in the first direction, so that at least a part of the fifth insulating part is located between the inner wall of the housing and the main body portion, thereby achieving an insulation and isolation effect of a part of regions between the inner wall of the housing and the main body portion, and reducing a risk of a short circuit between the main body portion and the inner wall of the housing.

In some embodiments, a minimum distance L5 between the fifth insulating part and the recessed segment in the first direction satisfies: 1 mm≤L5≤5 mm.

The minimum distance L5 can reflect a size by which the fifth insulating part extends relative to the recessed segment in a direction away from the top cover plate. The minimum distance L5 is greater than or equal to 1 mm and less than or equal to 5 mm, so that a material usage of the fifth insulating part can be reduced when an insulation and isolation effect of a part of regions between the inner wall of the housing and the electrode assembly is achieved.

In some embodiments, the minimum distance L5 satisfies: 1.5 mm≤L5≤5 mm.

The minimum distance L5 is optionally greater than or equal to 1.5 mm and less than or equal to 4 mm, so that the material usage of the fifth insulating part can be further reduced when the insulation and isolation effect of the part of the regions between the inner wall of the housing and the electrode assembly is achieved.

In some embodiments, the first insulating part includes an insulating film layer covering the surface of the retaining cavity. The top cover plate is in interference fit with the insulating film layer, to implement sealing connection between the top cover plate and the opening portion.

The insulating film layer covering the surface of the retaining cavity cooperates with the retaining effect of the bent structure to implement the interference fit between the insulating film layer and the top cover plate, so that the sealing connection between the top cover plate and the opening portion is implemented, sealing performance is improved, and a leakage risk is reduced. In addition, a structure is simpler, and is easy to be processed.

In some embodiments, the first insulating part includes an insulating film layer covering the surface of the retaining cavity, and the battery cell further includes a sealing gasket located between the insulating film layer and the top cover plate, to implement sealing connection between the top cover plate and the opening portion by using the sealing gasket.

In the bent structure, the top cover plate is retained by using the sealing gasket located between the top cover plate and the insulating film layer of the retaining cavity, and the sealing connection between the top cover plate and the opening portion is implemented through deformation of the sealing gasket, so that sealing performance is improved, a leakage risk is reduced, and a material requirement on the insulating film layer is reduced.

In some embodiments, a minimum thickness T of the top cover plate in the first direction satisfies: 0.5 mm≤T≤5 mm.

The minimum thickness T of the top cover plate in the first direction is greater than or equal to 0.5 mm and less than or equal to 5 mm, so that the top cover plate can have strength and rigidity and is not easily deformed, and a risk of soldering penetration or pseudo soldering during soldering can be reduced. In addition, space that is of the battery cell and that is occupied by the top cover plate in the first direction can be reduced, to facilitate improving the battery level of the battery cell.

In some embodiments, the minimum thickness T satisfies: 1.2 mm≤T≤2.5 mm.

The minimum thickness T of the top cover plate in the first direction further satisfies 1.2 mm≤T≤2.5 mm, so that the space that is of the battery cell and that is occupied by the top cover plate in the first direction can be effectively reduced when the top cover plate has high strength and rigidity, to facilitate improving the battery level of the battery cell.

In some embodiments, a surface area of a surface that is of the top cover plate and that is on a side away from the electrode assembly in the first direction is defined as S, a surface area of an exposed region of the surface that is of the top cover plate and that is on the side away from the electrode assembly in the first direction is defined as S1, and a ratio S1/S of S1 to S satisfies: S1/S≥50%.

In the battery cell of some embodiments, the opening portion partially covers the top cover plate to retain the top cover plate, so that the surface area S1 of the exposed region of the surface that is of the top cover plate and that is on the side away from the electrode assembly in the first direction is less than the surface area S of the surface that is of the top cover plate and that is on the side away from the electrode assembly in the first direction. S1 is greater than or equal to 0.5 times of S, so that the top cover plate can obtain a large electrical connection area used to be electrically connected to the external conductor, thereby reducing the internal resistance of the battery cell.

In some embodiments, the ratio S1/S satisfies: S1/S≥80%.

S1 is greater than or equal to 0.8 times of S, so that the top cover plate can obtain a larger electrical connection area used to be electrically connected to the external conductor, thereby further reducing the internal resistance of the battery cell.

In some embodiments, the tab includes a positive electrode tab and a negative electrode tab. The positive electrode tab and the negative electrode tab are respectively led from two ends that are of the main body portion and that are in the first direction. Two ends that are of the housing and that are in the first direction respectively have the opening portion and a bottom wall. The top cover plate serves as a positive electrode lead-out portion to be electrically connected to the positive electrode tab, and is configured to be connected to an external conductor of the battery cell. The bottom wall or a side wall of the housing serves as a negative electrode lead-out portion to be electrically connected to the negative electrode tab, and is configured to be connected to the external conductor of the battery cell. Alternatively, the top cover plate serves as a negative electrode lead-out portion to be electrically connected to the negative electrode tab, and is configured to be connected to an external conductor of the battery cell. The bottom wall or a side wall of the housing serves as a positive electrode lead-out portion to be electrically connected to the positive electrode tab, and is configured to be connected to the external conductor of the battery cell.

For the housing (for example, a cylindrical housing) having an opening on a single side, the opening portion thereof is located on one side of the housing in the first direction, and the other side is the bottom wall of the housing. Correspondingly, the positive electrode tab and the negative electrode tab respectively led from the two ends that are of the main body portion and that are in the first direction are electrically connected to the positive electrode lead-out portion and the negative electrode lead-out portion, to implement connection to the external conductor. In some embodiments, the top cover plate may serve as the positive electrode lead-out portion with an integrally formed structure, and correspondingly, the bottom wall or the side wall of the housing serves as the negative electrode lead-out portion. In some other embodiments, the top cover plate may serve as the negative electrode lead-out portion with an integrally formed structure, and correspondingly, the bottom wall or the side wall of the housing serves as the positive electrode lead-out portion. The integrally formed electrode lead-out portion has good electrical conductivity performance, and a connection operation on an internal connection part and an external connection part that are included in a split structure is omitted, to facilitate reducing a craft step.

In some embodiments, the tab includes a positive electrode tab and a negative electrode tab. The positive electrode tab and the negative electrode tab are respectively led from two ends that are of the main body portion and that are in the first direction. Two ends that are of the housing and that are in the first direction each have the opening portion. Each opening portion is covered by the top cover plate. One of the top cover plates covering the opening portions at the two ends of the housing serves as a positive electrode lead-out portion to be electrically connected to the positive electrode tab, and is configured to be connected to an external conductor of the battery cell. The other serves as a negative electrode lead-out portion to be electrically connected to the negative electrode tab.

For the housing (for example, a cylindrical housing) having openings on both sides, the opening portions thereof are located on both side of the housing in the first direction. Correspondingly, the positive electrode tab and the negative electrode tab respectively led from the two ends that are of the main body portion and that are in the first direction are electrically connected to the positive electrode lead-out portion and the negative electrode lead-out portion, to implement connection to the external conductor. In some embodiments, the top cover plate on one side may serve as the positive electrode lead-out portion with an integrally formed structure, and correspondingly, the top cover plate on the other side serves as the negative electrode lead-out portion with an integrally formed structure. In some other embodiments, the top cover plate on one side may serve as the negative electrode lead-out portion with an integrally formed structure, and correspondingly, the top cover plate on the other side serves as the positive electrode lead-out portion with an integrally formed structure. The integrally formed electrode lead-out portion has good electrical conductivity performance, and a connection operation on an internal connection part and an external connection part that are included in a split structure is omitted, to facilitate reducing a craft step.

In some embodiments, the main body portion includes a positive electrode plate and a negative electrode plate. The positive electrode plate includes a positive electrode current collector and a positive electrode active material disposed on the positive electrode current collector. The positive electrode current collector is connected to the positive electrode tab. The positive electrode active material includes an active material that is capable of reversibly deintercalating-intercalating sodium ions. The negative electrode plate includes a negative electrode current collector. The negative electrode current collector is connected to the negative electrode tab. A constituent material of the negative electrode current collector and a constituent material of the negative electrode lead-out portion both include an aluminum element, and a mass percentage of the aluminum element is greater than a mass percentage of each of other elements.

In a sodium-electric system, in consideration of that no alloying reaction occurs between sodium and aluminum at a low electric potential, and the aluminum has a low price and can replace another material with a higher price to form the negative electrode current collector, an aluminum alloy or aluminum metal with a mass percentage of the aluminum element greater than a mass percentage of another element can be selected as the negative electrode current collector, so that costs can be reduced, and a weight can be reduced.

In some embodiments, the constituent material of the negative electrode current collector and the constituent material of the negative electrode lead-out portion both include an aluminum element with a mass percentage greater than or equal to 90%.

The constituent material of the negative electrode current collector and the constituent material of the negative electrode lead-out portion are an aluminum alloy material or a pure aluminum material including the aluminum element with the mass percentage greater than or equal to 90%, so that good electrical conductivity can be achieved, and the weight is reduced. In addition, because the constituent materials thereof both include the aluminum element with the high content, a reliable connection effect can be more easily achieved when a connection craft such as soldering is performed.

In some embodiments, the battery cell further includes: a negative electrode adapter, electrically connected to the negative electrode current collector and the negative electrode lead-out portion. A constituent material of the negative electrode adapter includes an aluminum element, and a mass percentage of the aluminum element is greater than a mass percentage of each of other elements.

The negative electrode adapter is disposed to implement connection between the negative electrode current collector and the negative electrode lead-out portion. In addition, because the constituent material of the negative electrode current collector and the constituent material of the negative electrode lead-out portion both include the aluminum element with the mass percentage greater than that of another element, connection reliability of a fixed connection manner such as soldering can be improved between the negative electrode adapter and both the negative electrode current collector and the negative electrode lead-out portion, a structure of the negative electrode adapter portion is simplified, and processing complexity and costs are reduced.

In some embodiments, the constituent material of the negative electrode adapter includes an aluminum element with a mass percentage greater than or equal to 90%.

The constituent material of the negative electrode current collector, the constituent material of the negative electrode adapter, and the constituent material of the negative electrode lead-out portion are all an aluminum alloy material or a pure aluminum material including the aluminum element with the mass percentage greater than or equal to 90%, so that good electrical conductivity can be achieved, and the weight is reduced. In addition, because the constituent materials thereof all include the aluminum element with the high content, a reliable connection effect can be more easily achieved when a connection craft such as soldering is performed.

In some embodiments, a constituent material of the positive electrode lead-out portion includes an aluminum element, and a mass percentage of the aluminum element is greater than a mass percentage of each of other elements.

Electrical connection to the positive electrode current collector is implemented by using the positive electrode lead-out portion whose constituent material includes the aluminum element with the mass percentage greater than that of another element, and the positive electrode lead-out portion may be configured to be connected to the external conductor. Electrical connection to the aluminum positive electrode current collector and electrical connection to a bus member of pure aluminum or an aluminum alloy material, such as an aluminum bar, are separately implemented by using the positive electrode lead-out portion whose main element is the aluminum element, so that a structure of the positive electrode lead-out portion can be further simplified when the connection reliability of the fixed connection manner such as soldering is improved, and processing complexity and costs are reduced.

In some embodiments, the constituent material of the positive electrode lead-out portion includes an aluminum element with a mass percentage greater than or equal to 90%.

The constituent material of the positive electrode lead-out portion is an aluminum alloy material or a pure aluminum material including the aluminum element with the mass percentage greater than or equal to 90%, so that a reliable connection effect can be more easily achieved when a connection craft such as soldering is performed. In addition, this positive electrode lead-out portion has good electrical conductivity and a low weight.

In some embodiments, the battery cell further includes: a positive electrode adapter, respectively electrically connected to the positive electrode lead-out portion and the positive electrode current collector. A constituent material of the positive electrode adapter includes an aluminum element, and a mass percentage of the aluminum element is greater than a mass percentage of each of other elements.

The positive electrode adapter is disposed to implement connection between the positive electrode adapter and each of the positive electrode current collector and the positive electrode lead-out portion. In addition, because the constituent material of the positive electrode adapter and the constituent material of the positive electrode lead-out portion both include the aluminum element with the mass percentage greater than that of another element, connection reliability of a fixed connection manner such as soldering can be improved between the positive electrode adapter and the positive electrode lead-out portion, a structure of the positive electrode adapter portion is simplified, and processing complexity and costs are reduced.

In some embodiments, the constituent material of the positive electrode adapter includes an aluminum element with a mass percentage greater than or equal to 90%.

The constituent material of the positive electrode adapter and the constituent material of the positive electrode lead-out portion are all an aluminum alloy material or a pure aluminum material including the aluminum element with the mass percentage greater than or equal to 90%, so that good electrical conductivity can be achieved, and the weight is reduced. In addition, because the constituent materials of the positive electrode adapter and the positive electrode lead-out portion both include the aluminum element with the high content, a reliable connection effect can be more easily achieved when a connection craft such as soldering is performed.

In some embodiments, the positive electrode active material includes at least one of a sodium-containing layered transition metal oxide, a sodium-containing phosphate, and a Prussian blue analog.

The positive electrode active material including at least one of the sodium-containing layered transition metal oxide, the sodium-containing phosphate, and the Prussian blue analog is used, so that reversible deintercalation-intercalation of the sodium ions can be implemented.

According to an aspect of the present disclosure, a battery is provided, including the foregoing battery cell.

Performance of the battery using the foregoing battery cell can be effectively improved.

According to an aspect of the present disclosure, a power consuming apparatus is provided, including the foregoing battery.

Performance of the power consuming apparatus using the foregoing battery can be effectively improved.

### BRIEF DESCRIPTION OF THE DRAWINGS

To more clearly describe the technical solution of embodiments of the present disclosure, the accompanying drawings required in the embodiments of the present disclosure are briefly introduced below. It is clear that the accompanying drawings described below are only some embodiments of the present disclosure. For a person of ordinary skill in the art, other accompanying drawings can be further obtained based on the accompanying drawings without any creative effort.

The present disclosure may be understood more clearly according to the following detailed descriptions with reference to the accompanying drawings.
FIG. 1 is a schematic diagram of a structure of a power consuming device according to some embodiments of the present disclosure;
FIG. 2 is a schematic exploded view of a battery according to some embodiments of the present disclosure;
FIG. 3 is a schematic diagram of a structure of a battery cell according to some embodiments of the present disclosure;
FIG. 4 is a schematic exploded view of the embodiment shown in FIG. 3;
FIG. 5 is a schematic diagram of a section of the embodiment shown in FIG. 3;
FIG. 6 is a schematic diagram of an enlarged view of a region corresponding to a dashed-line ellipse A in FIG. 5;
FIG. 7 is a schematic diagram of an enlarged view of a region corresponding to a dashed-line ellipse B in FIG. 6;
FIG. 8 is a schematic diagram in which a top cover plate and an electrode assembly are removed in FIG. 7;
FIG. 9 is a schematic diagram of sizes corresponding to FIG. 7;
FIG. 10 is a schematic diagram of an enlarged view of another embodiment with reference to FIG. 7;
FIG. 11 is a schematic diagram of an enlarged view of another embodiment with reference to FIG. 4;
FIG. 12 is a schematic diagram of a structure of a battery cell according to some other embodiments of the present disclosure;
FIG. 13 is a schematic exploded view of the embodiment shown in FIG. 12;
FIG. 14 is a schematic exploded view of another embodiment with reference to FIG. 13; and
FIG. 15 is a schematic diagram of disposition of a positive electrode plate, a negative electrode plate, and an isolation member that are included in an electrode assembly in a battery cell according to some embodiments of the present disclosure.

It should be understood that sizes of parts shown in the accompanying drawings are not drawn according to an actual proportional relationship. In addition, same or similar reference signs indicate same or similar components.

### Descriptions of reference numerals:

10-electrode assembly; 11-main body portion; 12-tab; 12a-positive electrode tab; 12b-negative electrode tab; 111-positive electrode plate; 111a-positive electrode current collector; 111b-positive electrode active material; 112-negative electrode plate; 112a-negative electrode current collector; 112b-negative electrode active material; 113-isolation member;
20-shell; 21-housing; 21a-opening portion; 21b-bottom wall; 21c-side wall; 211-bent structure; 211a-retaining cavity; 211b-opening end surface; 211c-transition end surface; 211d-outer side surface; 2111-recessed segment; 2112-flange segment; 22-top cover plate;
30-insulating portion; 31-first insulating part; 32-second insulating part; 33-third insulating part; 34-fourth insulating part; 35-fifth insulating part; 36-sixth insulating part;
40-sealing gasket;
51-positive electrode lead-out portion; 52-negative electrode lead-out portion; 53-positive electrode adapter; 54-negative electrode adapter;
60-battery; 61-battery cell; 62-box body; 63-box cover; and
70-vehicle.

### DETAILED DESCRIPTION

Implementations of the present disclosure are further described in detail below with reference to the accompanying drawings and embodiments. Detailed descriptions of the following embodiments and the accompanying drawings are used to describe the principle of the present disclosure by way of example, but cannot be used to limit the scope of the present disclosure, that is, the present disclosure is not limited to the described embodiments. In the descriptions of the present disclosure, it should be noted that, unless otherwise stated, "a plurality of" means two or more; and the orientations or positional relationships indicated by the terms "upper", "lower", "left", "right", "inside", "outside", and the like are merely intended to help the descriptions of the present disclosure and simplify the descriptions other than indicate or imply that apparatuses or components need to have specific orientations, or be constructed and manipulated with specific orientations, and therefore shall not be understood as limitations on the present disclosure. Moreover, the terms "first", "second", "third" and the like are used for descriptive purposes only and are not to be construed as indicating or implying relative importance. The term "vertical" is not strictly vertical, but is within an error allowance range. The term "parallel" is not strictly parallel, but is within an error allowance range.

Coordination words in the following descriptions are all directions shown in the figures, and are not intended to limit a specific structure of the present disclosure. In the description of the present disclosure, it should be further noted that, unless otherwise explicitly specified or defined, the terms such as "mount", "install", "connect", and "connection" should be understood in a broad sense. For example, the connection may be a fixed connection, a detachable connection, or an integral connection; or may be a direct connection, or an indirect connection through an intermediary. A person of ordinary skill in the art may understand the specific meanings of the foregoing terms in the present disclosure according to specific situations.

Some implementations of the present invention are described in detail below with reference to the accompanying drawings. Features in the following embodiments may be combined with each other without conflict.

The term "a plurality of' appearing in the present disclosure means two or more (including two).

In an embodiment of the present disclosure, a battery cell may be a secondary battery. The secondary battery is a battery cell that can activate an active material through charging after the battery cell is discharged, to continue to use the battery cell.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in this embodiment of this application.

The battery cell generally includes an electrode assembly. The electrode assembly includes a plurality of electrode plates and an isolation member disposed between two adjacent electrode plates. The plurality of electrode plates may include a positive electrode plate and a negative electrode plate having a polarity opposite to that of the positive electrode plate. During charging and discharging of the battery cell, active ions (such as lithium ions or sodium ions) are reversibly intercalated and deintercalated between the positive electrode plate and the negative electrode plate. The isolation member is disposed between the positive electrode plate and the negative electrode plate, can avoid a short circuit between the positive electrode plate and the negative electrode plate, and allow the active ions to pass through.

In some implementations, the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material is disposed on either or both of the two opposite surfaces of the positive electrode current collector.

In an example, the positive electrode current collector may be a metal foil or a composite current collector. For example, aluminum or stainless steel on which silver surface treatment is performed, stainless steel, copper, aluminum, an aluminum alloy, nickel, a nickel alloy, a carbon electrode, carbon, titanium, or a titanium alloy may be used as the metal foil. The composite current collector may include a polymer material base layer and a metal layer. The composite current collector may be formed by forming a metal material (aluminum, an aluminum alloy, nickel, a nickel alloy, titanium, a titanium alloy, silver, a silver alloy, or the like) on the polymer material substrate (for example, a substrate of polypropylene, polyethylene terephthalate, polybutylene terephthalate, polystyrene, or polyethylene).

In an example, the positive electrode active material may include at least one of the following materials: a lithium-containing phosphate, a lithium transition metal oxide, and respective modified compounds thereof. An example of the lithium-containing phosphate may include, but is not limited to, at least one of lithium iron phosphate (for example, LiFePO₄ (which is also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, OLiNi_{1/3}Co_{1/3}Mn_{1/3}O₂ (which may also be referred to as NCM₃₃₃ for short)), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), a lithium nickel cobalt aluminum oxide (for example, LiNi_{0.85}Co_{0.15}Al_{0.05}O₂), and modified compounds thereof.

For an embodiment in which a positive electrode active material includes an active material that can implement reversible deintercalation-intercalation of sodium ions, the positive electrode active material includes at least one of a sodium-containing layered transition metal oxide, a sodium-containing phosphate, and a Prussian blue analog.

Optionally, the sodium-containing layered transition metal oxide includes a substance whose general formula is Na_{f}M_{g}FeₕO₂. M includes at least one of transition metal elements, 0.67<f<1.1, 0.5<g<1, and 0<h<0.5. For example, the sodium-containing layered transition metal oxide may be Na_{0.88}Cu_{0.24}Fe_{0.29}Mn_{0.47}O₂.

Optionally, the sodium-containing phosphate includes a substance whose general formula is NaₑMe_{c}(PO₄)_{d}O₂X. Me includes at least one of transition metal elements, X includes at least one of halogens, 0<e≤4, 0<c≤2, and 1≤d≤3. In some embodiments, the sodium-containing phosphate may be Na₃V₂(PO₄)₂O₂F.

Optionally, the Prussian blue analog includes a substance whose general formula is NaₓP[R(CN)₆]δ·zH₂O. P and R each independently include at least one of transition metal elements, 0<x≤2, 0<δ≤1, and 0≤z≤10. In some embodiments, the Prussian blue analog may be Na₂Ni_{0.17}Co_{0.83}Fe(CN)₆.

Optionally, the transition metal element includes at least one of Ti, Cr, Mn, Fe, Co, Ni, V, Cu, and Zn.

Optionally, the halogen includes at least one of F, Cl, and Br.

In some embodiments, the positive electrode active material may be dispersed in a solvent with a conductive agent, a binder, and any other components, to form a positive electrode slurry coated on the surface of the positive electrode current collector. In an example, the binder may include at least one of polyvinylidene fluoride, polytetrafluoroethylene, vinylidene fluoride-tetrafluoroethylene-propylene terpolymer, vinylidene fluoridehexafluoropropylene-tetrafluoroethylene terpolymer, tetrafluoroethylene-hexafluoropropylene copolymer, and fluorine-containing acrylic resin. In an example, the conductive agent may include at least one of superconducting carbon, acetylene black, carbon black, Ketjen black, carbon dots, carbon nanotubes, graphene, and carbon nanofibers.

However, the present disclosure is not limited to such materials, and may alternatively use another conventional material that may be used as a positive electrode active material layer for batteries. These positive electrode active material layers may be used alone or in combination with two or more.

In some implementations, the negative electrode plate may include a negative electrode current collector. In some other embodiments, the negative electrode plate may include a negative electrode current collector and a negative electrode active material disposed on at least one surface of the negative electrode current collector.

In an example, the negative electrode current collector may be a metal foil, foamed metal, or a composite current collector. For example, aluminum or stainless steel on which silver surface treatment is performed, stainless steel, copper, aluminum, an aluminum alloy, nickel, a nickel alloy, a carbon electrode, carbon, titanium, or a titanium alloy may be used as the metal foil. The foamed metal may be foamed nickel, foamed copper, foamed aluminum, a foamed alloy, foamed carbon, or the like. The composite current collector may include a polymer material base layer and a metal layer. The composite current collector can be formed by forming a metal material (copper, a copper alloy, nickel, a nickel alloy, titanium, a titanium alloy, silver, a silver alloy, or the like) on the polymer material substrate (for example, a substrate of polypropylene, polyethylene terephthalate, polybutylene terephthalate, polystyrene, or polyethylene).

For example, the negative electrode current collector has two surfaces opposite to each other in a thickness direction of the negative electrode current collector, and the negative electrode active material is disposed on either or both of the two opposite surfaces of the negative electrode current collector.

In an example, the negative electrode active material may be a negative electrode active material layer that is used for battery cells and that is well-known in the art. In an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon-oxygen compound, silicon-carbon composite, siliconnitrogen composite, or silicon alloy. The tin-based material may be selected from at least one of elemental tin, tin-oxygen compound, or tin alloy. However, the present disclosure is not limited to such materials, and may alternatively use another conventional material that may be used as a negative electrode active material for batteries. These negative electrode active materials may be used alone or in combination with two or more.

In some implementations, the electrode assembly further includes the isolation member, and the isolation member is disposed between the positive electrode plate and the negative electrode plate.

In some implementations, the isolation member is a separator. A type of the separator is not particularly limited in the present disclosure, and any well-known separator with a porous structure having good chemical stability and mechanical stability may be selected.

In an example, a main material of the separator may be selected from at least one of glass fiber, non-woven fabric, polyethylene, polypropylene, polyvinylidene fluoride, and ceramic. The separator may be a single-layer film or a multi-layer composite film without special limitations. When the separator is a multi-layer composite film, materials of the layers may be the same or different without special limitations. The isolation member may be an independent component located between the positive electrode plate and the negative electrode plate, or may be attached to a surface of the positive electrode plate and/or a surface of the negative electrode plate.

In some implementations, the isolation member is a solid electrolyte. The solid electrolyte is disposed between the positive electrode plate and the negative electrode plate, and transmits ions and isolates a positive electrode from a negative electrode.

In some implementations, the battery cell further includes an electrolyte. The electrolyte transmits ions between the positive electrode and the negative electrode. A type of the electrolyte is not specifically limited in the present disclosure, and may be selected as required. The electrolyte may be liquid, gelled, or all solid.

In an example, the liquid electrolyte includes electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. Optionally, the solution may be an ether solvent. The ether solven may include one or more of dimethoxyethane, ethylene glycol diethyl ether, diglyme, triethylene glycol dimethyl ether, tetraethylene glycol dimethyl ether, 1,3-dioxolane, tetrahydrofuran, methyltetrahydrofuran, diphenyl ether, and crown ether.

In an example, the solid electrolyte includes a polymer solid electrolyte, an inorganic solid electrolyte, and a composite solid electrolyte.

In an example, the polymer solid electrolyte may be polyether (polyethylene, oxidized), polysiloxane, polycarbonate, polyacrylonitrile, polyvinylidene fluoride, poly (methyl methacrylate), a single-ionic polymer, or cellulose.

In an example, the inorganic solid electrolyte may be one or more of an oxide solid electrolyte (crystalline perovskite, a sodium superconducting ion conductor, garnet, or an amorphous LiPON thin film), a sulfide solid electrolyte (a crystalline lithium superconducting ion conductor (germanium lithium phosphorotetrathioate sulfide or argyrodite), or an amorphous sulfide), and a halide solid electrolyte, a nitride solid electrolyte, and a hydride solid electrolyte.

In an example, the composite solid electrolyte is formed by adding an inorganic solid electrolyte filler to a polymer solid electrolyte.

In some implementations, the electrode assembly includes a winding structure. The positive electrode plate, the negative electrode plate, and the isolation member are wound into the winding structure. One or more positive electrode plates and negative electrode plates may be respectively disposed. In an example, a plurality of positive electrode plates and a plurality of negative electrode plates are alternately arranged along a thickness direction of the electrode plates. In some other implementations, the electrode assembly includes a laminated structure, or the electrode assembly may include a combination of a winding structure and a laminated structure.

In some implementations, a shape of the electrode assembly may be a cylindrical shape, a flat shape, a polygonal prism shape, or the like.

In some implementations, the electrode assembly includes a tab, and the tab may export a current from the electrode assembly. The tab may include a positive electrode tab and a negative electrode tab. The positive electrode tab is connected to the positive electrode current collector of the positive electrode plate, and the negative electrode tab is connected to the negative electrode current collector of the negative electrode plate. The positive electrode tab may be obtained by cutting the positive electrode current collector, or may be connected to a side edge of the positive electrode current collector through soldering. The negative electrode tab may also be obtained by cutting the negative electrode current collector, or may be connected to a side edge of the negative electrode current collector through soldering.

For example, the battery cell may be a cylindrical battery cell, a prismatic battery cell, a soft pack battery cell, or a battery cell of another shape. The prismatic battery cell includes a square-case battery cell, a blade-shaped battery cell, or a multi-prismatic battery. The multi-prismatic battery is, for example, a hexagonal prismatic battery.

A battery mentioned in the embodiments of the present disclosure is a single physical module including one or more battery cells to provide a higher voltage and a higher capacity.

In some embodiments, the battery may be a battery module. When there are a plurality of battery cells, the plurality of battery cells are arranged and fixedly formed into a battery module. The battery module may include a plurality of battery cells in series, parallel, or series and parallel.

In some embodiments, the battery may be a battery pack, including a box body and a battery cell. The battery cell or the battery module is accommodated in the box body.

In some embodiments, the box body may serve as a part of a chassis structure of a vehicle. For example, a part of the box body may serve as at least a part of a floor of a vehicle, or a part of the box body may serve as at least a part of a cross beam and a longitudinal beam of a vehicle.

In some embodiments, the battery may be an energy storage apparatus. The energy storage apparatus includes an energy storage container, an energy storage electric cabinet, or the like.

In some related technologies, the battery cell is provided, on an end cover, with an electrode lead-out portion that protrudes out from a surface of the end cover. A mounting structure of the electrode lead-out portion on the end cover is complex, and an area used for electrical connection to an external conductor of the battery cell is limited, affecting performance of the battery cell.

In view of this, an embodiment of the present disclosure provides a battery cell, including an electrode assembly, a shell, and an insulating portion. The electrode assembly includes a main body portion and a tab. The tab is led from at least one end that is of the main body portion and that is in a first direction. The shell has a cavity that accommodates the electrode assembly. The shell includes a housing and a top cover plate. At least one end that is of the housing and that is in the first direction has an opening portion. The top cover plate covers the opening portion. The tab is electrically connected to the top cover plate. The insulating portion is at least partially disposed at the opening portion, and includes a first insulating part located between the opening portion and the top cover plate.

In this embodiment, the top cover plate may serve as an electrode lead-out portion with an integrally formed structure, to be electrically connected to an electrode plate and an external conductor, so that the electrode lead-out portion obtains a larger electrical connection area, reduces an internal resistance, has a simpler structure, and occupies few space, to facilitate further improving a battery level, thereby improving performance of the battery cell. The first insulating part of the insulating portion is disposed between the opening portion of the housing and the top cover plate, so that an insulation and isolation effect between the opening portion and the top cover plate can be achieved, to avoid a short circuit between the top cover plate and the housing, thereby improving reliability of the battery cell.

The battery cell in this embodiment of the present disclosure may be used various types of batteries. The battery cell is a smallest unit forming a battery. The battery cell includes the electrode assembly that undergoes electrochemical reactions. In some embodiments, the battery may include a box body and a battery cell. The box body is configured to provide accommodating space for the battery cell, and the battery cell is mounted in the box body. In some embodiments, the battery may alternatively include a box body and a battery module, and the battery module may include a plurality of battery cells in series, parallel, or series and parallel.

The battery in this embodiment of the present disclosure may be used in various types of power consuming devices using the battery. The power consuming devices may be a mobile phone, a portable apparatus, a laptop, an electric automobile, an electric vehicle, a ship, a spacecraft, an electronic toy, an electric tool, etc. For example, the spacecraft includes an airplane, a rocket, a space shuttle, a spaceship and the like; the electronic toy includes a fixed or mobile electronic toy, such as a game console, an electric automobile toy, an electric ship toy, an electric aircraft toy and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator and an electric planer. The foregoing power consuming devices are not particularly limited in this embodiment of the present disclosure. The battery may be configured to supply power to a power consuming device such as a vehicle, for example, provide a power supply for controlling the vehicle or a power supply for driving the vehicle.

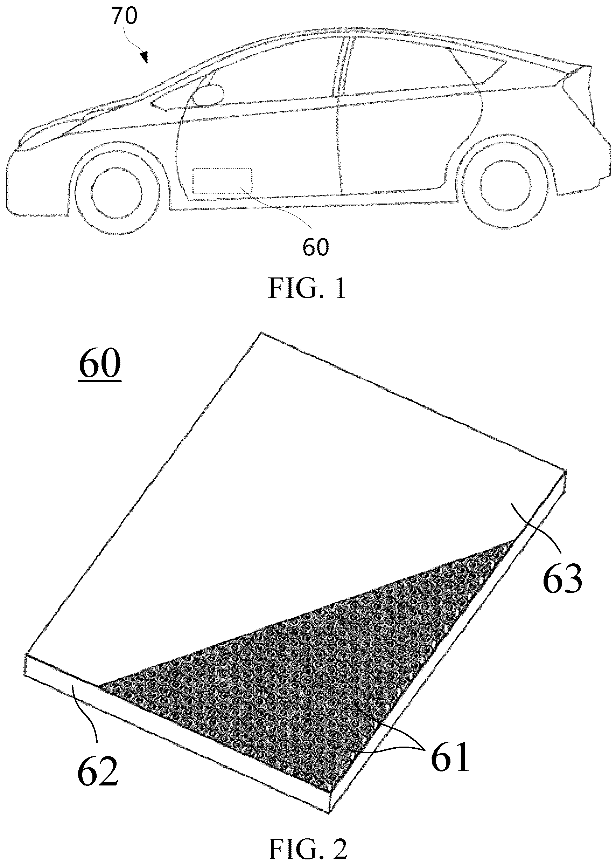

FIG. 1 is a schematic diagram of a structure of a power consuming device according to some embodiments of the present disclosure. For convenience, an example in which the power consuming apparatus is a vehicle is used for description. A vehicle 70 may be a fuel powered vehicle, a gas powered vehicle, or a new energy vehicle. The new energy vehicle may be a pure electric vehicle, a hybrid powered vehicle, or the like. A battery 60 may be disposed on the bottom, in the front, or in the rear of the vehicle 70.

The battery 60 may be configured to supply power to the vehicle 70. For example, the battery 60 may be used as an operating power supply of the vehicle 70 and used for a circuit system of the vehicle 70, for example, may be used for operating electricity requirements during starting, navigation, and operation of the vehicle 70. The battery 60 can be used not only as the operating power supply of the vehicle 70, but also as a driving power supply of the vehicle 70, to alternatively or partially replace fuel or natural gas to provide driving power for the vehicle 70.

An axle, a wheel, a motor, and a controller may be further disposed inside the vehicle 70, and the controller is configured to control the battery 60 to supply power to the motor. For example, when the vehicle 70 uses the battery 60 as the driving power supply, the battery 60 replaces or partially replaces fuel or natural gas to provide, to the motor, power required for constant-speed and acceleration. The motor is configured to drive the axle to rotate, so as to drive the wheel to rotate.

FIG. 2 is a schematic exploded view of a battery according to some embodiments of the present disclosure.

Referring to FIG. 2, in some embodiments, a battery 60 includes a box body 62, a box cover 63 covering an opening side of the box body 62, and one or more battery cells 61 disposed in the box body 62. The box body 62 and the box cover 63 may provide accommodating space for the battery cell 61, provide functions such as cooling, sealing, and anti-collision, and can further avoid an adverse impact of liquid or another foreign object on charging and discharging or safety of the battery cell.

The box body 62 and the box cover 63 may have a plurality of shapes, for example, a cuboid or a cylinder. The box body 62 may be a hollowed structure with one side open, and the box cover 63 is a plate-shaped structure. The box cover 63 covers the open side of the box body 62, so that the internal accommodating space is formed. In another embodiment, the box body 62 has a hollowed structure with one side open, and the box cover 63 is also a hollowed structure with one side open. The open side of the box cover 63 covers the open side of the box body 62, so that the internal accommodating space is formed.

Referring to FIG. 2, the battery cells 61 are electrically connected, for example, in series, parallel, or series and parallel, to achieve required electric performance parameters of the battery 60. The series and parallel means that the plurality of battery cells 61 are connected in both series and parallel. Adjacent battery cells 61 may be electrically connected by using a busbar 26. The plurality of battery cells 61 are arranged in a row. One or more rows of battery cells 61 may be disposed in the box body 62 as required.

In some embodiments, the battery cells 61 of the battery 60 may be arranged along at least one of a length direction and a width direction of the box body 62. According to an actual requirement, at least one row or column of battery cells 61 may be arranged. As required, one or more layers of battery cells 61 may be alternatively arranged in a height direction of the battery 60.

In some embodiments, the plurality of battery cells 61 may be first connected in series, parallel, or series and parallel to form battery modules, and then the plurality of battery modules are connected in series, parallel, or series and parallel to form an integrity, which is accommodated in the box body 62. In some other embodiments, all the battery cells 61 are directly connected in series, parallel, or series and parallel together, and then an integrity including all the battery cells 61 is accommodated in the box body.

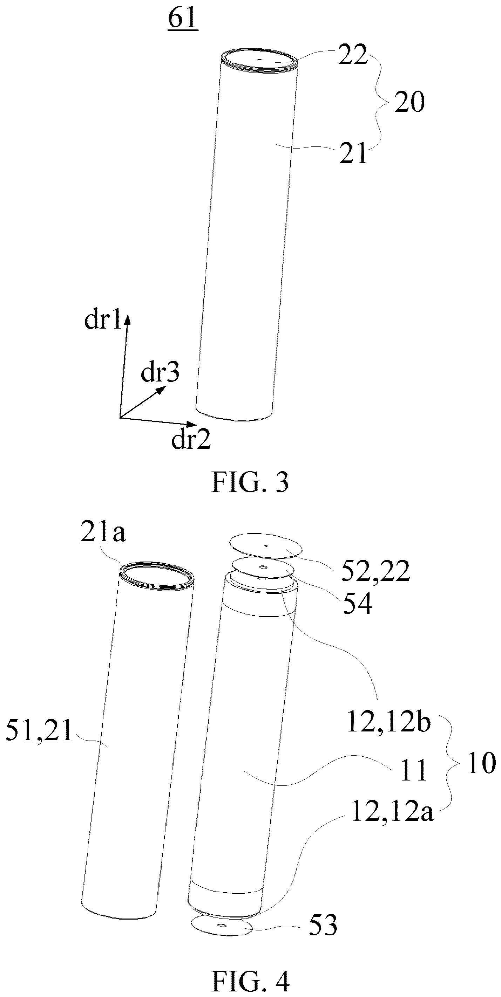

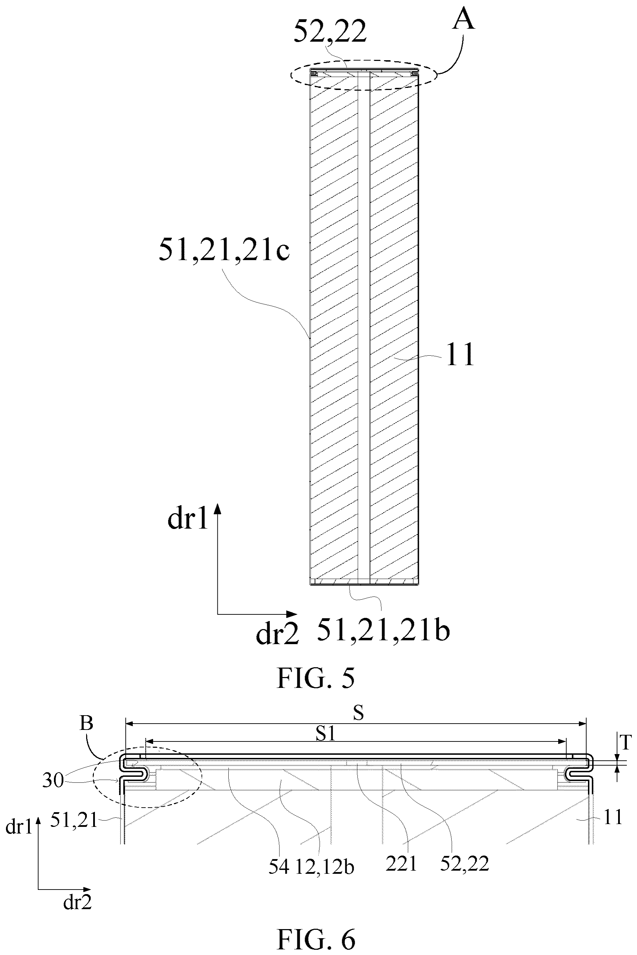

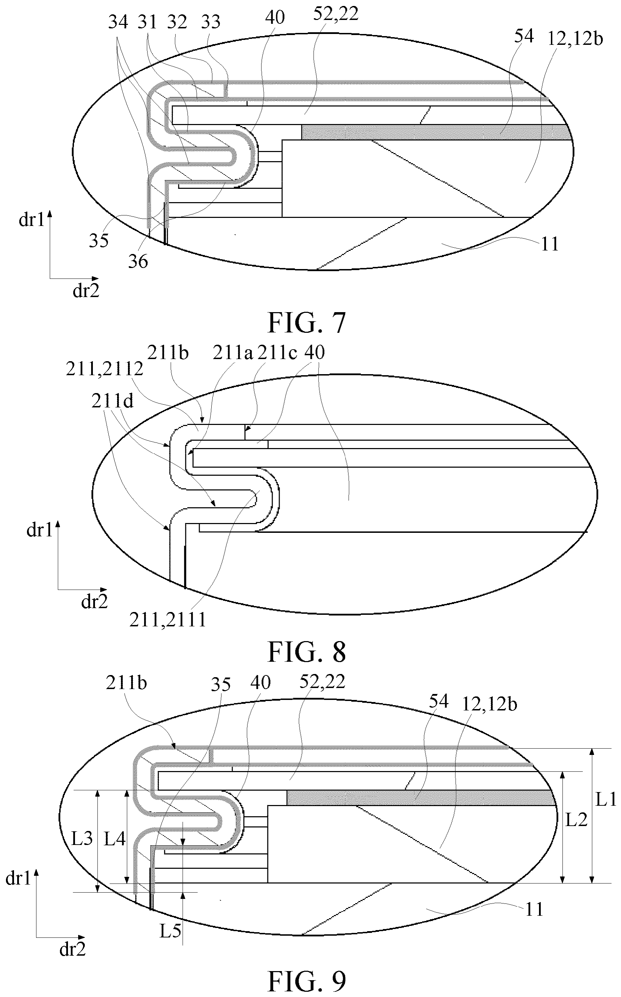

FIG. 3 is a schematic diagram of a structure of a battery cell according to some embodiments of the present disclosure. FIG. 4 is a schematic exploded view of the embodiment shown in FIG. 3. FIG. 5 is a schematic diagram of a section of the embodiment shown in FIG. 3. FIG. 6 is a schematic diagram of an enlarged view of a region corresponding to a dashed-line ellipse A in FIG. 5. FIG. 7 is a schematic diagram of an enlarged view of a region corresponding to a dashed-line ellipse B in FIG. 6. FIG. 8 is a schematic diagram in which a top cover plate and an electrode assembly are removed in FIG. 7.

Referring to FIG. 3, FIG. 4, and FIG. 6, an embodiment of the present disclosure provides a battery cell 61, including an electrode assembly 10, a shell 20, and an insulating portion 30. The electrode assembly 10 includes a main body portion 11 and a tab 12. The tab 12 is led from at least one end that is of the main body portion 11 and that is in a first direction dr1. The shell 20 has a cavity that accommodates the electrode assembly 10. The shell 20 includes a housing 21 and a top cover plate 22. At least one end that is of the housing 21 and that is in the first direction dr1 has an opening portion 21a. The top cover plate 22 covers the opening portion 21a. The tab 12 is electrically connected to the top cover plate 22. The insulating portion 30 is at least partially disposed at the opening portion 21a, and includes a first insulating part 31 located between the opening portion 21a and the top cover plate 22.

In this embodiment, the shell is configured to encapsulate the electrode assembly, an electrolyte, and the like. Materials of the housing and the top cover plate may be copper, iron, aluminum, steel, an aluminum alloy, or the like. The main body portion may be formed by winding or laminating two types of electrode plates with opposite polarities and an isolation member located between the two types of electrode plates. At least a part of the insulating portion is disposed at the opening portion, to achieve an insulation and isolation effect of the opening portion. The insulation portion may alternatively be partially disposed at a position other than the opening portion on the housing. The insulating portion may be in contact with or attached to a surface of the opening portion. For example, the insulating portion includes an insulating film layer formed on the surface of the opening portion, or an insulating gasket in contact with the surface of the opening portion.

The housing has the opening portion at one end or two opposite ends in the first direction. When covering the opening portion, the top cover plate is further electrically connected to the tab, and may serve as an electrode lead-out portion with an integrally formed structure, to be electrically connected to an external conductor of the battery cell, so that the electrode lead-out portion obtains a larger electrical connection area, reduces an internal resistance, has a simpler structure, and occupies few space, to facilitate further improving a battery level, thereby improving performance of the battery cell. The first insulating part of the insulating portion is disposed between the opening portion of the housing and the top cover plate, so that an insulation and isolation effect between the opening portion and the top cover plate can be achieved, to avoid a short circuit between the top cover plate and the housing, thereby improving reliability of the battery cell.

The first direction dr1 is shown in FIG. 3. The direction may be parallel to a height direction of the housing and parallel to a thickness direction of the top cover plate. A second direction dr2 perpendicular to the first direction dr1 and a third direction dr3 are perpendicular to each other.

Referring to FIG. 6, FIG. 7, and FIG. 8, in some embodiments, the opening portion 21a includes a bent structure 211. The bent structure 211 has a retaining cavity 211a configured to retain a peripheral outer edge of the top cover plate 22. The first insulating part 31 covers a surface of the retaining cavity 211a.

The retaining cavity has an accommodating portion for accommodating the peripheral outer edge of the top cover plate, and can support and fix the top cover plate. The opening portion having the bent structure may obtain, through a bending craft, the retaining cavity configured to retain the peripheral outer edge of the top cover plate. Forming is convenient, and the bent structure has high strength and rigidity, to facilitate a reliable retaining effect for the top cover plate. The first insulating part covers the surface of the retaining cavity, so that reliable insulation and isolation between the opening portion and the top cover plate can be ensured when the opening portion can have the reliable retaining effect for the top cover plate.

In some embodiments, the first insulating part 31 is continuously disposed on the surface of the retaining cavity 211a along a peripheral direction of the top cover plate 22.

The first insulating part is continuously disposed on the surface of the retaining cavity along the peripheral direction of the top cover plate, so that the peripheral outer edge of the top cover plate and the opening portion can form the first insulating part that is continuously closed in the peripheral direction, thereby further improving an insulation and isolation impact, and also facilitating disposition of the first insulating part at the opening portion.

Referring to FIG. 7 and FIG. 8, in some embodiments, in some embodiments, the bent structure 211 has an opening end surface 211b located on a side that is of the retaining cavity 211a and that is away from the electrode assembly 10. The insulating portion 30 further includes a second insulating part 32 covering the opening end surface 211b.

In consideration of that the opening end surface of the bent structure is adjacent to the external conductor when the top cover plate of the battery cell serves as the electrode lead-out portion to be connected to the external conductor of the battery cell (for example, connected to another battery cell by using a bus member), insulation and protection for the opening end surface are implemented by using the second insulating part covering the opening end surface, so that the opening end surface can be insulated and isolated from the external conductor in the first direction, to reduce a risk of a short circuit caused when the external conductor connected to the top cover plate is conducted to the opening end surface, and improve the reliability of the battery cell.

FIG. 9 is a schematic diagram of sizes corresponding to FIG. 7.

Referring to FIG. 9, in some embodiments, a minimum distance L1 between the opening end surface 211b and the main body portion 11 in the first direction dr1 is greater than a maximum distance L2 between the top cover plate 22 and the main body portion 11 in the first direction dr1.

In the first direction, the minimum distance L1 between the opening end surface and the main body portion is greater than the maximum distance L2 between the top cover plate and the main body portion, so that the top cover plate is recessed relative to the opening end surface. This structure may be conveniently formed by covering the peripheral outer edge of the top cover plate by a flange of the bent structure, and a more simplified structure of the top cover plate, for example, a plate-like structure that is of the top cover plate and that has a uniform thickness, may be used. In addition, the opening end surface protruding upward relative to the top cover plate is protected by the second insulating part, so that the risk of the short circuit caused by conduction to the external conductor connected to the top cover plate is reduced, and the reliability of the battery cell is improved.

Referring to FIG. 7 and FIG. 8, in some embodiments, there is a transition end surface 211c between the opening end surface 211b and an inner wall surface of the retaining cavity 211a. The insulating portion 30 further includes a third insulating part 33 covering a surface of the transition end surface 211c. The first insulating part 31, the third insulating part 33, and the second insulating part 32 are continuously connected.

In consideration of that the bent structure of the opening portion has a thickness, between the opening end surface and the surface of the retaining cavity, there is the transition end surface corresponding to a wall thickness of the bent structure. The third insulating part covers the transition end surface, so that a risk of a short circuit caused when the external conductor (for example, a bus member) that is of the battery cell and that is connected to the top cover plate is conducted to the opening portion through a transition segment can be reduced. In addition, the first insulating part, the third insulating part, and the second insulating part are continuously connected, so that disposition of the first insulating part, the third insulating part, and the second insulating part at the opening portion can be convenient, and processing difficulty is reduced.

Referring to FIG. 7 and FIG. 8, in some embodiments, the insulating portion 30 further includes a fourth insulating part 34 covering an outer side surface 211d of the bent structure 211 in the peripheral direction, and the fourth insulating part 34 and the second insulating part 32 are continuously connected.

For an inner side and an outer side of the housing of the battery cell, the fourth insulating part covers the outer side surface of the bent structure in the peripheral direction, so that a risk of a short circuit caused when the external conductor (for example, a bus member) that is of the battery cell and that is connected to the top cover plate is conducted to the opening portion through the outer side surface of the bent structure can be reduced. In addition, the fourth insulating part and the second insulating part are continuously connected, so that disposition of the fourth insulating part and the second insulating part at the opening portion can be convenient, and the processing difficulty is reduced.

Referring to FIG. 8, in some embodiments, the bent structure 211 includes a recessed segment 2111 and a flange segment 2112. The recessed segment 2111 is recessed relative to a peripheral outer surface of the housing 21, to form, on an inner side of the housing 21, a step surface supporting the top cover plate 22 in the first direction dr1. The flange segment 2112 is connected to the recessed segment 2111, and extends toward the inner side of the housing 21 relative to the peripheral outer surface of the housing 21, to enclose the retaining cavity 211a with the step surface. Referring to FIG. 7, the insulating portion 30 further includes a fifth insulating part 35 covering a surface of a region that is of an inner wall of the housing 21 and that is adjacent to the recessed segment 2111.

The step surface supporting the top cover plate is formed by using the recessed segment of the bent structure, and cooperates with the flange segment to together define a position of the top cover plate in the first direction, so that a reliable retaining effect of the bent structure for the top cover plate at the opening portion can be achieved, to facilitate improving sealing of a position at which the top cover plate is mounted. In addition, the fifth insulating part is disposed on the surface of the region that is of the inner wall of the housing and that is adjacent to the recessed segment, so that the housing can be insulated and isolated from the electrode assembly by using the fifth insulating part, a risk of a short circuit between the electrode assembly and the housing is reduced, and the reliability of the battery cell is improved.

Referring to FIG. 7 and FIG. 8, in some embodiments, the insulating portion 30 further includes a sixth insulating part 36 located between the fifth insulating part 35 and the first insulating part 31, and the sixth insulating part 36 is separately continuously connected to the fifth insulating part 35 and the first insulating part 31 on a surface of the recessed segment 2111.

The sixth insulating part covering the surface of the recessed segment is continuously disposed between the fifth insulating part and the first insulating part, so that insulation and isolation can be formed between the electrode assembly and the recessed segment, thereby reducing a risk of a short circuit between the electrode assembly and the recessed segment of the bent structure, and improving the reliability of the battery cell.

Referring to FIG. 9, in some embodiments, a maximum distance L3 between the region covered by the fifth insulating part 35 on the inner wall of the housing 21 and the top cover plate 22 in the first direction dr1 is greater than a minimum distance L4 between the main body portion 11 and the top cover plate 22 in the first direction dr1.

The maximum distance L3 between the region covered by the fifth insulating part on the inner wall of the housing and the top cover plate in the first direction can reflect a range covered by the fifth insulating part on the inner wall of the housing in the first direction. If the maximum distance L3 is large, the fifth insulating part covers a large range on the inner wall of the housing in the first direction. The maximum distance L3 is greater than the minimum distance L4 between the main body portion and the top cover plate in the first direction, so that at least a part of the fifth insulating part is located between the inner wall of the housing and the main body portion, thereby achieving an insulation and isolation effect of a part of regions between the inner wall of the housing and the main body portion, and reducing a risk of a short circuit between the main body portion and the inner wall of the housing.

Referring to FIG. 9, in some embodiments, a minimum distance L5 between the fifth insulating part 35 and the recessed segment 2111 in the first direction dr1 satisfies: 1 mm≤L5≤5 mm.

The minimum distance L5 can reflect a size by which the fifth insulating part extends relative to the recessed segment in a direction away from the top cover plate. The minimum distance L5 is greater than or equal to 1 mm and less than or equal to 5 mm, so that a material usage of the fifth insulating part can be reduced when an insulation and isolation effect of a part of regions between the inner wall of the housing and the electrode assembly is achieved.

Optionally, the minimum distance L5 satisfies: 1.5 mm≤L5≤5 mm.

The minimum distance L5 is optionally greater than or equal to 1.5 mm and less than or equal to 4 mm. For example, L5 is 1.5 mm, 2 mm, 2.5 mm, 3 mm, 3.5 mm, or 4 mm, so that the material usage of the fifth insulating part can be further reduced when the insulation and isolation effect of the part of the regions between the inner wall of the housing and the electrode assembly is achieved.

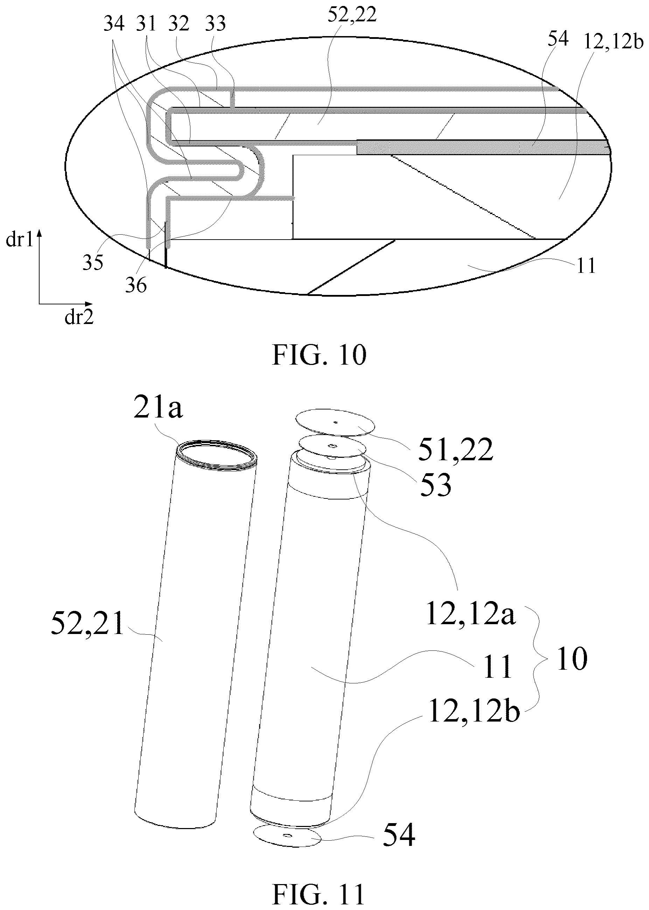

FIG. 10 is a schematic diagram of an enlarged view of another embodiment with reference to FIG. 7.

Referring to FIG. 10, in some embodiments, the first insulating part 31 includes an insulating film layer covering the surface of the retaining cavity 211a. The top cover plate 22 is in interference fit with the insulating film layer, to implement sealing connection between the top cover plate 22 and the opening portion 21a.

The insulating film layer may include a material such as SiNx (silicon-rich silicon nitride), SiO₂ (silicon dioxide), or Al₂O₃ (aluminum oxide). The insulating film layer in interference fit with the top cover plate may have elasticity. Therefore, when achieving the insulation and isolation effect, the insulating film layer cooperates with the retaining effect of the bent structure to implement the interference fit between the insulating film layer and the top cover plate, so that the sealing connection between the top cover plate and the opening portion is implemented, sealing performance is improved, and a leakage risk is reduced. In addition, a structure is simpler, and is easy to be processed.

In the foregoing embodiment, other than the first insulating part 31, another part (for example, at least one of the second insulating part 32, the third insulating part 33, the fourth insulating part 34, the fifth insulating part 35, and the sixth insulating part 36) of the insulating portion 30 that is not in contact with the top cover plate 22 may also be an insulating film layer covering at least a part of the surface of the opening portion.

Referring to FIG. 7 and FIG. 8, in some embodiments, the first insulating part 31 includes an insulating film layer covering the surface of the retaining cavity 211a, and the battery cell 61 further includes a sealing gasket 40 located between the insulating film layer and the top cover plate 22, to implement sealing connection between the top cover plate 22 and the opening portion 21a by using the sealing gasket 40.

The insulating film layer may include a material such as SiNx (silicon-rich silicon nitride), SiO₂ (silicon dioxide), or Al₂O₃ (aluminum oxide). The sealing gasket may be a material having elasticity, such as rubber or plastic. In the bent structure, the top cover plate is retained by using the sealing gasket located between the top cover plate and the insulating film layer of the retaining cavity, and the sealing connection between the top cover plate and the opening portion is implemented through deformation of the sealing gasket, so that sealing performance is improved, a leakage risk is reduced, and a material requirement on the insulating film layer is reduced.

In the foregoing embodiment, other than the first insulating part 31, another part (for example, at least one of the second insulating part 32, the third insulating part 33, the fourth insulating part 34, the fifth insulating part 35, and the sixth insulating part 36) of the insulating portion 30 that is not in contact with the top cover plate 22 may also be an insulating film layer covering at least a part of the surface of the opening portion.

Referring to FIG. 6, in some embodiments, a minimum thickness T of the top cover plate 22 in the first direction dr1 satisfies: 0.5 mm≤T≤5 mm.

The minimum thickness T of the top cover plate in the first direction is greater than or equal to 0.5 mm and less than or equal to 5 mm, so that the top cover plate can have strength and rigidity and is not easily deformed, and a risk of soldering penetration or pseudo soldering during soldering can be reduced. In addition, space that is of the battery cell and that is occupied by the top cover plate in the first direction can be reduced, to facilitate improving the battery level of the battery cell.

Optionally, the minimum thickness T satisfies: 1.2 mm≤T≤2.5 mm.

The minimum thickness T of the top cover plate in the first direction further satisfies 1.2 mm≤T≤2.5 mm. For example, T is 1.2 mm, 1.5 mm, 1.8 mm, 2.2 mm, or 2.5 mm, so that the space that is of the battery cell and that is occupied by the top cover plate in the first direction can be effectively reduced when the top cover plate has high strength and rigidity, to facilitate improving the battery level of the battery cell.

Referring to FIG. 6, in some embodiments, a surface area of a surface that is of the top cover plate 22 and that is on a side away from the electrode assembly 10 in the first direction dr1 is defined as S, and a surface area of an exposed region of the surface that is of the top cover plate 22 and that is on the side away from the electrode assembly 10 in the first direction dr1 is defined as S1. A ratio S1/S of S1 to S satisfies: S1/S≥50%.

In the battery cell of some embodiments, the opening portion partially covers the top cover plate to retain the top cover plate, so that the surface area S1 of the exposed region of the surface that is of the top cover plate and that is on the side away from the electrode assembly in the first direction is less than the surface area S of the surface that is of the top cover plate and that is on the side away from the electrode assembly in the first direction. S1 is greater than or equal to 0.5 times of S, so that the top cover plate can obtain a large electrical connection area used to be electrically connected to the external conductor, thereby reducing the internal resistance of the battery cell.

Optionally, the ratio S1/S satisfies: S1/S≥80%.

S1 is greater than or equal to 0.8 times of S. For example, S1 is 0.8 times, 0.85 times, 0.9 times, or 0.95 times of S, so that the top cover plate can obtain a larger electrical connection area used to be electrically connected to the external conductor, thereby further reducing the internal resistance of the battery cell.

Referring to FIG. 4 and FIG. 5, in some embodiments, the tab 12 includes a positive electrode tab 12a and a negative electrode tab 12b. The positive electrode tab 12a and the negative electrode tab 12b are respectively led from two ends that are of the main body portion 11 and that are in the first direction dr1. Two ends that are of the housing 21 and that are in the first direction dr1 respectively have the opening portion 21a and a bottom wall 21b. The top cover plate 22 serves as a negative electrode lead-out portion 52 to be electrically connected to the negative electrode tab 12b, and is configured to be connected to an external conductor of the battery cell 61. The bottom wall 21b or a side wall 21c of the housing 21 serves as a positive electrode lead-out portion 51 to be electrically connected to the positive electrode tab 12a, and is configured to be connected to the external conductor of the battery cell 61.

In the cylindrical battery cell shown in FIG. 4 and FIG. 5, the housing 21 is a structure with the opening portion on one side. The bottom wall 21b of the housing is located on an opposite side of the opening portion 21a along the first direction dr1. The side wall 21c connecting the bottom wall 21b to the opening portion 21a is located between the bottom wall 21b and the opening portion 21a. The opening portion 21a, the side wall 21c, and the bottom wall 21b of the housing 21 may be an integrally formed structure.

For the housing (for example, a cylindrical housing) having an opening on a single side, the opening portion thereof is located on one side of the housing in the first direction, and the other side is the bottom wall of the housing. Correspondingly, the positive electrode tab and the negative electrode tab respectively led from the two ends that are of the main body portion and that are in the first direction are electrically connected to the positive electrode lead-out portion and the negative electrode lead-out portion, to implement connection to the external conductor. The top cover plate may serve as the positive electrode lead-out portion with an integrally formed structure, and correspondingly, the bottom wall or the side wall of the housing serves as the negative electrode lead-out portion. The integrally formed electrode lead-out portion has good electrical conductivity performance, and a connection operation on an internal connection part and an external connection part that are included in a split structure is omitted, to facilitate reducing a craft step.

FIG. 11 is a schematic diagram of an enlarged view of another embodiment with reference to FIG. 4.

Referring to FIG. 11, in comparison with the embodiments shown in FIG. 4 to FIG. 10, in the embodiment shown in FIG. 11, the top cover plate 22 serves as a positive electrode lead-out portion 51 to be electrically connected to the positive electrode tab 12a, and is configured to be connected to an external conductor of the battery cell 61, and the bottom wall 21b or a side wall 21c of the housing 21 serves as a negative electrode lead-out portion 52 to be electrically connected to the negative electrode tab 12b, and is configured to be connected to the external conductor of the battery cell 61.

For the housing (for example, a cylindrical housing) having an opening on a single side, the opening portion thereof is located on one side of the housing in the first direction, and the other side is the bottom wall of the housing. Correspondingly, the positive electrode tab and the negative electrode tab respectively led from the two ends that are of the main body portion and that are in the first direction are electrically connected to the positive electrode lead-out portion and the negative electrode lead-out portion, to implement connection to the external conductor. The top cover plate may serve as the positive electrode lead-out portion with an integrally formed structure, and correspondingly, the bottom wall or the side wall of the housing serves as the negative electrode lead-out portion. The integrally formed electrode lead-out portion has good electrical conductivity performance, and a connection operation on an internal connection part and an external connection part that are included in a split structure is omitted, to facilitate reducing a craft step.

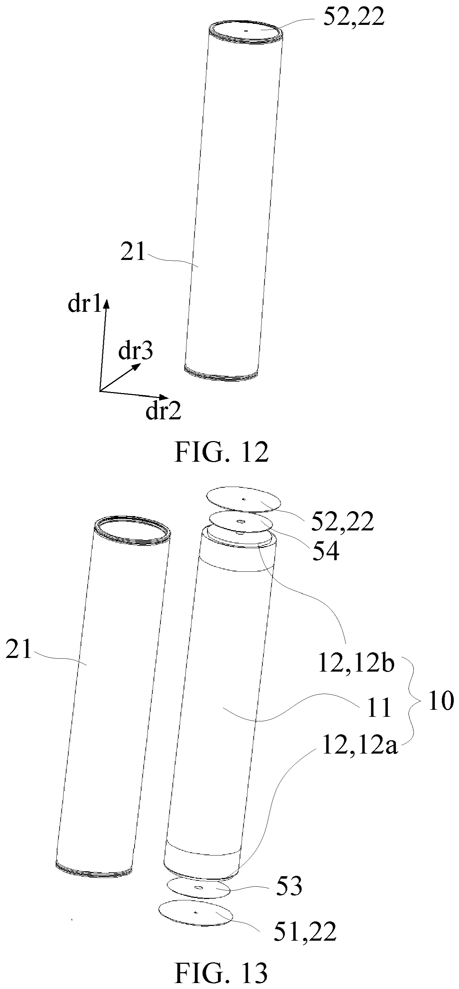

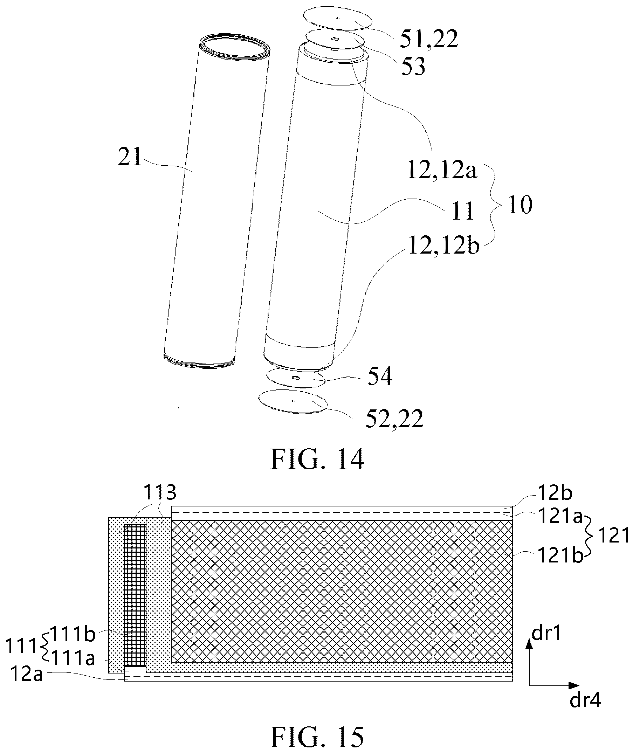

FIG. 12 is a schematic diagram of a structure of a battery cell according to some other embodiments of the present disclosure. FIG. 13 is a schematic exploded view of the embodiment shown in FIG. 12. FIG. 14 is a schematic exploded view of another embodiment with reference to FIG. 13.

Referring to FIG. 12 to FIG. 14, in comparison with the embodiments shown in FIG. 4 to FIG. 11, in the embodiment shown in FIG. 13, the tab 12 includes a positive electrode tab 12a and a negative electrode tab 12b, the positive electrode tab 12a and the negative electrode tab 12b are respectively led from two ends that are of the main body portion 11 and that are in the first direction dr1, two ends that are of the housing 21 and that are in the first direction dr1 each have the opening portion 21a, and each opening portion 21a is covered by the top cover plate 22. One of the top cover plates 22 covering the opening portions 21a at the two ends of the housing 21 serves as a positive electrode lead-out portion 51 to be electrically connected to the positive electrode tab 12a, and is configured to be connected to an external conductor of the battery cell 61. The other serves as a negative electrode lead-out portion 52 to be electrically connected to the negative electrode tab 12b.

For the housing (for example, a cylindrical housing) having openings on both sides, the opening portions thereof are located on both side of the housing in the first direction. Correspondingly, the positive electrode tab and the negative electrode tab respectively led from the two ends that are of the main body portion and that are in the first direction are electrically connected to the positive electrode lead-out portion and the negative electrode lead-out portion, to implement connection to the external conductor. In the embodiment shown in FIG. 13, the top cover plate 22 on a lower side may serve as the positive electrode lead-out portion 51 with an integrally formed structure, and correspondingly, the top cover plate 22 on the other side serves as the negative electrode lead-out portion 52 with an integrally formed structure. In some other embodiments shown in FIG. 14, the top cover plate 22 on a lower side may serve as the negative electrode lead-out portion 52 with an integrally formed structure, and correspondingly, the top cover plate 22 on the other side serves as the positive electrode lead-out portion 51 with an integrally formed structure. The integrally formed electrode lead-out portion herein has good electrical conductivity performance, and a connection operation on an internal connection part and an external connection part that are included in a split structure is omitted, to facilitate reducing a craft step.

FIG. 15 is a schematic diagram of disposition of a positive electrode plate, a negative electrode plate, and an isolation member that are included in an electrode assembly in a battery cell according to some embodiments of the present disclosure.

Referring to FIG. 4, FIG. 11, and FIG. 13 to FIG. 15, in some embodiments, the main body portion 11 includes a positive electrode plate 111 and a negative electrode plate 112. The positive electrode plate 111 includes a positive electrode current collector 111a and a positive electrode active material 111b disposed on the positive electrode current collector 111a. The positive electrode current collector 111a is connected to the positive electrode tab 12a. The positive electrode active material 111b includes an active material that is capable of reversibly deintercalating-intercalating sodium ions. The negative electrode plate 112 includes a negative electrode current collector 112a. The negative electrode current collector 112a is connected to the negative electrode tab 12b. A constituent material of the negative electrode current collector 112a and a constituent material of the negative electrode lead-out portion 52 both include an aluminum element and a mass percentage of the aluminum element is greater than a mass percentage of each of other elements.

The main body portion 11 may further include an isolation member 113 located between the positive electrode plate 111 and the negative electrode plate 112. The positive electrode plate 111, the isolation member 113, and the negative electrode plate 112 may be laminated and wound into the main body portion 11 with a cylindrical winding structure. FIG. 15 is a schematic diagram of the positive electrode plate 111, the negative electrode plate 112, and the isolation member 113 after the positive electrode plate 111, the negative electrode plate 112, and the isolation member 113 are expanded in a fourth direction dr4.

In a sodium-electric system, in consideration of that no alloying reaction occurs between sodium and aluminum at a low electric potential, and the aluminum has a low price and can replace another material with a higher price to form the negative electrode current collector, an aluminum alloy or aluminum metal with a mass percentage of the aluminum element greater than a mass percentage of another element can be selected as the negative electrode current collector, so that costs can be reduced, and a weight can be reduced.

In this embodiment, the another element other than the aluminum element in the constituent material of the negative electrode current collector may include one or more of copper, manganese, silicon, magnesium, zinc, nickel, iron, titanium, chromium, zirconium, cobalt, and a rare-earth element, or may include an element used as an impurity.

The mass percentage of the aluminum element may be measured by using a spectrometer. For example, a mass percentage of the aluminum element in a sample is measured by using a direct-reading spectrometer (direct-reading spectrometer). In a measurement instance, a sample is disposed on a spark stand of a photoelectric direct-reading spectrometer, and a to-be-measured surface of the sample is grinded. The spectrometer is turned on to spark the sample for one or more times. After the sample is sparked by a sparking light source on the spark stand, a feature spectrum of each element is generated by using a condenser lens and a linear electric motor. A spectrum line of each element is automatically arranged through optical grating splitting, and is subsequently irradiated on a photomultiplier through an exit slit. The spectrum line is converted into a photocurrent by the photomultiplier. A content of a measured element may be finally obtained through data processing by using a relationship between the photocurrent, an element spectrum intensity, and an element content.

In some embodiments, the positive electrode active material 111b includes at least one of a sodium-containing layered transition metal oxide, a sodium-containing phosphate, and a Prussian blue analog.

The positive electrode active material including at least one of the sodium-containing layered transition metal oxide, the sodium-containing phosphate, and the Prussian blue analog is used, so that reversible deintercalation-intercalation of the sodium ions can be implemented.

In some embodiments, the constituent material of the negative electrode current collector 112a and the constituent material of the negative electrode lead-out portion 52 both include an aluminum element with a mass percentage greater than or equal to 90%.

The constituent material of the negative electrode current collector and the constituent material of the negative electrode lead-out portion are an aluminum alloy material or a pure aluminum material including the aluminum element with the mass percentage greater than or equal to 90%, so that good electrical conductivity can be achieved, and the weight is reduced. In addition, because the constituent materials thereof both include the aluminum element with the high content, a reliable connection effect can be more easily achieved when a connection craft such as soldering is performed.

Referring to FIG. 4, FIG. 11, FIG. 13, and FIG. 14, in some embodiments, the battery cell 61 further includes a negative electrode adapter 54. The negative electrode adapter 54 is electrically connected to the negative electrode current collector 112a and the negative electrode lead-out portion 52. A constituent material of the negative electrode adapter 54 includes an aluminum element, and a mass percentage of the aluminum element is greater than a mass percentage of each of other elements.

In this embodiment, the another element other than the aluminum element in the constituent material of the negative electrode adapter may include one or more of copper, manganese, silicon, magnesium, zinc, nickel, iron, titanium, chromium, zirconium, cobalt, and a rare-earth element, or may include an element used as an impurity.

The negative electrode adapter is disposed to implement connection between the negative electrode current collector and the negative electrode lead-out portion. In addition, because the constituent material of the negative electrode current collector and the constituent material of the negative electrode lead-out portion both include the aluminum element with the mass percentage greater than that of another element, connection reliability of a fixed connection manner such as soldering can be improved between the negative electrode adapter and both the negative electrode current collector and the negative electrode lead-out portion, a structure of the negative electrode adapter portion is simplified, and processing complexity and costs are reduced.

In some embodiments, the constituent material of the negative electrode adapter 54 includes an aluminum element with a mass percentage greater than or equal to 90%.

The constituent material of the negative electrode current collector, the constituent material of the negative electrode adapter, and the constituent material of the negative electrode lead-out portion are all an aluminum alloy material or a pure aluminum material including the aluminum element with the mass percentage greater than or equal to 90%, so that good electrical conductivity can be achieved, and the weight is reduced. In addition, because the constituent materials thereof all include the aluminum element with the high content, a reliable connection effect can be more easily achieved when a connection craft such as soldering is performed.

In some embodiments, a constituent material of the positive electrode lead-out portion 51 includes an aluminum element, and a mass percentage of the aluminum element is greater than a mass percentage of each of other elements.

The another element other than the aluminum element in the constituent material of the positive electrode lead-out portion may include one or more of copper, manganese, silicon, magnesium, zinc, nickel, iron, titanium, chromium, zirconium, cobalt, and a rare-earth element, or may include an element used as an impurity.

Electrical connection to the positive electrode current collector is implemented by using the positive electrode lead-out portion whose constituent material includes the aluminum element with the mass percentage greater than that of another element, and the positive electrode lead-out portion may be configured to be connected to the external conductor. Electrical connection to the aluminum positive electrode current collector and electrical connection to a bus member of pure aluminum or an aluminum alloy material, such as an aluminum bar, are separately implemented by using the positive electrode lead-out portion whose main element is the aluminum element, so that a structure of the positive electrode lead-out portion can be further simplified when the connection reliability of the fixed connection manner such as soldering is improved, and processing complexity and costs are reduced.

In some embodiments, the constituent material of the positive electrode lead-out portion 51 includes an aluminum element with a mass percentage greater than or equal to 90%.

The constituent material of the positive electrode lead-out portion is an aluminum alloy material or a pure aluminum material including the aluminum element with the mass percentage greater than or equal to 90%, so that a reliable connection effect can be more easily achieved when a connection craft such as soldering is performed. In addition, this positive electrode lead-out portion has good electrical conductivity and a low weight.

In some embodiments, the battery cell 61 further includes a positive electrode adapter 53. The positive electrode adapter 53 is respectively electrically connected to the positive electrode lead-out portion 51 and the positive electrode current collector 111a. A constituent material of the positive electrode adapter 53 includes an aluminum element, and a mass percentage of the aluminum element is greater than a mass percentage of each of other elements.

In this embodiment, the another element other than the aluminum element in the constituent material of the positive electrode adapter may include one or more of copper, manganese, silicon, magnesium, zinc, nickel, iron, titanium, chromium, zirconium, cobalt, and a rare-earth element, or may include an element used as an impurity.

The positive electrode adapter is disposed to implement connection between the positive electrode adapter and each of the positive electrode current collector and the positive electrode lead-out portion. In addition, because the constituent material of the positive electrode adapter and the constituent material of the positive electrode lead-out portion both include the aluminum element with the mass percentage greater than that of another element, connection reliability of a fixed connection manner such as soldering can be improved between the positive electrode adapter and the positive electrode lead-out portion, a structure of the positive electrode adapter portion is simplified, and processing complexity and costs are reduced.

In some embodiments, the constituent material of the positive electrode adapter 53 includes an aluminum element with a mass percentage greater than or equal to 90%.

The constituent material of the positive electrode adapter and the constituent material of the positive electrode lead-out portion are all an aluminum alloy material or a pure aluminum material including the aluminum element with the mass percentage greater than or equal to 90%, so that good electrical conductivity can be achieved, and the weight is reduced. In addition, because the constituent materials of the positive electrode adapter and the positive electrode lead-out portion both include the aluminum element with the high content, a reliable connection effect can be more easily achieved when a connection craft such as soldering is performed.

According to an aspect of the present disclosure, a battery 60 is provided, including the foregoing battery cell 61 in any one of the embodiments.

Based on the battery cell having better performance in the foregoing embodiments, performance of the battery using the battery cell in the foregoing embodiments can be improved.

Referring to FIG. 2, in some embodiments, the battery 60 includes a plurality of battery cells 61, and may further include a bus member configured to electrically connect the plurality of battery cells 61. A constituent material of the bus member includes an aluminum element with a mass percentage greater than that of another element. For example, the constituent material of the bus member includes an aluminum element with a mass percentage greater than or equal to 90%. The another element other than the aluminum element in the constituent material of the bus member may include one or more of copper, manganese, silicon, magnesium, zinc, nickel, iron, titanium, chromium, zirconium, cobalt, and a rare-earth element, or may include an element used as an impurity.

The electrical connection between the plurality of battery cells 61 is implemented by using the bus member whose constituent material includes the aluminum element with the mass percentage greater than that of another element, so that the bus member can be more easily soldered reliably to the negative electrode lead-out portion 30 whose constituent material includes the aluminum element with the mass percentage greater than that of another element. The bus member may serve as the external conductor of the battery cell 61 to be electrically connected to at least one of the negative electrode lead-out portion and the positive electrode lead-out portion of the battery cell 61.

According to an aspect of the present disclosure, a power consuming apparatus is provided, including the foregoing battery 60 in any one of the embodiments.

Based on the battery having better performance in the foregoing embodiments, performance of the power consuming apparatus using the battery in the foregoing embodiments can be improved.

In some specific embodiments, as shown in FIG. 3 to FIG. 9, the battery cell 61 includes the electrode assembly 10, the shell 20, the insulating portion 30, the negative electrode adapter 54, and the positive electrode adapter 53. The electrode assembly 10 includes the main body portion 11 and the tab 12. The tab 12 includes the positive electrode tab 12a and the negative electrode tab 12b. The positive electrode tab 12a and the negative electrode tab 12b are respectively led from the two ends that are of the main body portion 11 and that are in the first direction dr1.

The shell 20 has the cavity for accommodating the electrode assembly 10. The shell 20 includes the housing 21 and the top cover plate 22. The two ends that are of the housing 21 and that are in the first direction dr1 each have the opening portion 21a, and each opening portion 21a is covered by the top cover plate 22. The top cover plate 22 serves as the negative electrode lead-out portion 52 to be electrically connected to the negative electrode tab 12b, and is configured to be connected to the external conductor of the battery cell 61. The bottom wall 21b or the side wall 21c of the housing 21 serves as the positive electrode lead-out portion 51 to be electrically connected to the positive electrode tab 12a, and is configured to be connected to the external conductor of the battery cell 61.

The opening portion 21a includes the bent structure 211. The bent structure 211 has the retaining cavity 211a configured to retain the peripheral outer edge of the top cover plate 22. The bent structure 211 includes the recessed segment 2111 and the flange segment 2112. The recessed segment 2111 is recessed relative to the peripheral outer surface of the housing 21, to form, on the inner side of the housing 21, the step surface supporting the top cover plate 22 in the first direction dr1. The flange segment 2112 is connected to the recessed segment 2111, and extends toward the inner side of the housing 21 relative to the peripheral outer surface of the housing 21, to enclose the retaining cavity 211a with the step surface.

The insulating portion 30 is at least partially disposed at the opening portion 21a, and includes the first insulating part 31 located between the opening portion 21a and the top cover plate 22. The first insulating part 31 covers the surface of the retaining cavity 211a, and is continuously disposed on the surface of the retaining cavity 211a along the peripheral direction of the top cover plate 22.

The bent structure 211 has the opening end surface 211b located on the side that is of the retaining cavity 211a and that is away from the electrode assembly 10. The insulating portion 30 further includes the second insulating part 32 covering the opening end surface 211b. There is the transition end surface 211c between the opening end surface 211b and the inner wall surface of the retaining cavity 211a. The insulating portion 30 further includes the third insulating part 33 covering the surface of the transition end surface 211c. The insulating portion 30 further includes the fourth insulating part 34 covering the outer side surface 211d of the bent structure 211 in the peripheral direction, the fifth insulating part 35 covering the surface of the region that is of the inner wall of the housing 21 and that is adjacent to the recessed segment 2111, and the sixth insulating part 36 located between the fifth insulating part 35 and the first insulating part 31.

The sixth insulating part 36, the fifth insulating part 35, the first insulating part 31, the third insulating part 33, the second insulating part 32, and the fourth insulating part 34 are continuously connected.

The first insulating part 31 includes the insulating film layer covering the surface of the retaining cavity 211a, and the battery cell 61 further includes the sealing gasket 40 located between the insulating film layer and the top cover plate 22, to implement the sealing connection between the top cover plate 22 and the opening portion 21a by using the sealing gasket 40.

Although the present disclosure is described with reference to preferred embodiments, various improvements may be made to the present disclosure and equivalent parts may be replaced with those in the present disclosure without departing from the scope of the present disclosure. Especially, as long as there is no structural conflict, the various technical features mentioned in each embodiment can be combined in any way. The present disclosure is not limited to the particular embodiments disclosed herein, but includes all technical solutions that fall within the scope of the claims.

## Claims

1. A battery cell (61), comprising:
an electrode assembly (10), comprising a main body portion (11) and a tab (12), wherein the tab (12) is led from at least one end that is of the main body portion (11) and that is in a first direction (dr1);
a shell (20), having a cavity that accommodates the electrode assembly (10), wherein the shell (20) comprises a housing (21) and a top cover plate (22), at least one end that is of the housing (21) and that is in the first direction (dr1) has an opening portion (21a), the top cover plate (22) covers the opening portion (21a), and the tab (12) is electrically connected to the top cover plate (22); and
an insulating portion (30), at least partially disposed at the opening portion (21a), and comprising a first insulating part (31) located between the opening portion (21a) and the top cover plate (22).

2. The battery cell (61) according to claim 1, wherein the opening portion (21a) comprises a bent structure (211), the bent structure (211) has a retaining cavity (211a) configured to retain a peripheral outer edge of the top cover plate (22), and the first insulating part (31) covers a surface of the retaining cavity (211a).

3. The battery cell (61) according to claim 2, wherein the first insulating part (31) is continuously disposed on the surface of the retaining cavity (211a) along a peripheral direction of the top cover plate (22).

4. The battery cell (61) according to claim 2 or 3, wherein the bent structure (211) has an opening end surface (211b) located on a side that is of the retaining cavity (211a) and that is away from the electrode assembly (10), and the insulating portion (30) further comprises a second insulating part (32) covering the opening end surface (211b).

5. The battery cell (61) according to claim 4, wherein a minimum distance L1 between the opening end surface (211b) and the main body portion (11) in the first direction (dr1) is greater than a maximum distance L2 between the top cover plate (22) and the main body portion (11) in the first direction (dr1).

6. The battery cell (61) according to claim 4 or 5, wherein there is a transition end surface (211c) between the opening end surface (211b) and an inner wall surface of the retaining cavity (211a), the insulating portion (30) further comprises a third insulating part (33) covering a surface of the transition end surface (211c), and the first insulating part (31), the third insulating part (33), and the second insulating part (32) are continuously connected.

7. The battery cell (61) according to any one of claims 4 to 6, wherein the insulating portion (30) further comprises a fourth insulating part (34) covering an outer side surface (211d) of the bent structure (211) in the peripheral direction, and the fourth insulating part (34) and the second insulating part (32) are continuously connected.

8. The battery cell (61) according to any one of claims 2 to 7, wherein the bent structure (211) comprises:
a recessed segment (2111), recessed relative to a peripheral outer surface of the housing (21), to form, on an inner side of the housing (21), a step surface supporting the top cover plate (22) in the first direction (dr1); and
a flange segment (2112), connected to the recessed segment (2111), and extending toward the inner side of the housing (21) relative to the peripheral outer surface of the housing (21), to enclose the retaining cavity (211a) with the step surface, wherein
the insulating portion (30) further comprises a fifth insulating part (35) covering a surface of a region that is of an inner wall of the housing (21) and that is adjacent to the recessed segment (2111).

9. The battery cell (61) according to claim 8, wherein the insulating portion (30) further comprises a sixth insulating part (36) located between the fifth insulating part (35) and the first insulating part (31), and the sixth insulating part (36) is separately continuously connected to the fifth insulating part (35) and the first insulating part (31) on a surface of the recessed segment (2111).

10. The battery cell (61) according to claim 8 or 9, wherein a maximum distance L3 between the region covered by the fifth insulating part (35) on the inner wall of the housing (21) and the top cover plate (22) in the first direction (dr1) is greater than a minimum distance L4 between the main body portion (11) and the top cover plate (22) in the first direction (dr1).

11. The battery cell (61) according to any one of claims 8 to 10, wherein a minimum distance L5 between the fifth insulating part (35) and the recessed segment (2111) in the first direction (dr1) satisfies: 1 mm≤L5≤5 mm.

12. The battery cell (61) according to claim 11, wherein the minimum distance L5 satisfies: 1.5 mm≤L5≤5 mm.

13. The battery cell (61) according to any one of claims 2 to 12, wherein the first insulating part (31) comprises an insulating film layer covering the surface of the retaining cavity (211a), and the top cover plate (22) is in interference fit with the insulating film layer, to implement sealing connection between the top cover plate (22) and the opening portion (21a).

14. The battery cell (61) according to any one of claims 2 to 12, wherein the first insulating part (31) comprises an insulating film layer covering the surface of the retaining cavity (211a), and the battery cell (61) further comprises a sealing gasket (40) located between the insulating film layer and the top cover plate (22), to implement sealing connection between the top cover plate (22) and the opening portion (21a) by using the sealing gasket (40).

15. The battery cell (61) according to any one of claims 1 to 14, wherein a minimum thickness T of the top cover plate (22) in the first direction (dr1) satisfies: 0.5 mm≤T≤5 mm.

16. The battery cell (61) according to claim 15, wherein the minimum thickness T satisfies: 1.2 mm≤T≤2.5 mm.

17. The battery cell (61) according to any one of claims 1 to 16, wherein a surface area of a surface that is of the top cover plate (22) and that is on a side away from the electrode assembly (10) in the first direction (dr1) is defined as S, a surface area of an exposed region of the surface that is of the top cover plate (22) and that is on the side away from the electrode assembly (10) in the first direction (dr1) is defined as S1, and a ratio S1/S of S1 to S satisfies: S1/S≥50%.

18. The battery cell (61) according to claim 17, wherein the ratio S1/S satisfies: S1/S≥80%.

19. The battery cell (61) according to any one of claims 1 to 18, wherein the tab (12) comprises a positive electrode tab (12a) and a negative electrode tab (12b), the positive electrode tab (12a) and the negative electrode tab (12b) are respectively led from two ends that are of the main body portion (11) and that are in the first direction (dr1), and two ends that are of the housing (21) and that are in the first direction (dr1) respectively have the opening portion (21a) and a bottom wall (21b); and
the top cover plate (22) serves as a positive electrode lead-out portion (51) to be electrically connected to the positive electrode tab (12a), and is configured to be connected to an external conductor of the battery cell (61), and the bottom wall (21b) or a side wall (21c) of the housing (21) serves as a negative electrode lead-out portion (52) to be electrically connected to the negative electrode tab (12b), and is configured to be connected to the external conductor of the battery cell (61); or
the top cover plate (22) serves as a negative electrode lead-out portion (52) to be electrically connected to the negative electrode tab (12b), and is configured to be connected to an external conductor of the battery cell (61), and the bottom wall (21b) or a side wall (21c) of the housing (21) serves as a positive electrode lead-out portion (51) to be electrically connected to the positive electrode tab (12a), and is configured to be connected to the external conductor of the battery cell (61).

20. The battery cell (61) according to any one of claims 1 to 18, wherein the tab (12) comprises a positive electrode tab (12a) and a negative electrode tab (12b), the positive electrode tab (12a) and the negative electrode tab (12b) are respectively led from two ends that are of the main body portion (11) and that are in the first direction (dr1), two ends that are of the housing (21) and that are in the first direction (dr1) each have the opening portion (21a), and each opening portion (21a) is covered by the top cover plate (22); and
one of the top cover plates (22) covering the opening portions (21a) at the two ends of the housing (21) serves as a positive electrode lead-out portion (51) to be electrically connected to the positive electrode tab (12a), and is configured to be connected to an external conductor of the battery cell (61); and the other serves as a negative electrode lead-out portion (52) to be electrically connected to the negative electrode tab (12b).

21. The battery cell (61) according to claim 19 or 20, wherein the main body portion (11) comprises a positive electrode plate (111) and a negative electrode plate (112), the positive electrode plate (111) comprises a positive electrode current collector (111a) and a positive electrode active material (111b) disposed on the positive electrode current collector (111a), the positive electrode current collector (111a) is connected to the positive electrode tab (12a), the positive electrode active material (111b) comprises an active material that is capable of reversibly deintercalating-intercalating sodium ions, the negative electrode plate (112) comprises a negative electrode current collector (112a), and the negative electrode current collector (112a) is connected to the negative electrode tab (12b), wherein
a constituent material of the negative electrode current collector (112a) and a constituent material of the negative electrode lead-out portion (52) both comprise an aluminum element, and a mass percentage of the aluminum element is greater than a mass percentage of each of other elements.

22. The battery cell (61) according to claim 21, wherein the constituent material of the negative electrode current collector (112a) and the constituent material of the negative electrode lead-out portion (52) both comprise an aluminum element with a mass percentage greater than or equal to 90%.

23. The battery cell (61) according to claim 21 or 22, further comprising:
a negative electrode adapter (54), electrically connected to the negative electrode current collector (112a) and the negative electrode lead-out portion (52), wherein
a constituent material of the negative electrode adapter (54) comprises an aluminum element, and a mass percentage of the aluminum element is greater than a mass percentage of each of other elements.

24. The battery cell (61) according to claim 23, wherein the constituent material of the negative electrode adapter (54) comprises an aluminum element with a mass percentage greater than or equal to 90%.

25. The battery cell (61) according to any one of claims 21 to 24, wherein a constituent material of the positive electrode lead-out portion (51) comprises an aluminum element, and a mass percentage of the aluminum element is greater than a mass percentage of each of other elements.

26. The battery cell (61) according to claim 25, wherein the constituent material of the positive electrode lead-out portion (51) comprises an aluminum element with a mass percentage greater than or equal to 90%.

27. The battery cell (61) according to any one of claims 21 to 26, further comprising:
a positive electrode adapter (53), respectively electrically connected to the positive electrode lead-out portion (51) and the positive electrode current collector (111a), wherein
a constituent material of the positive electrode adapter (53) comprises an aluminum element, and a mass percentage of the aluminum element is greater than a mass percentage of each of other elements.

28. The battery cell (61) according to claim 27, wherein the constituent material of the positive electrode adapter (53) comprises an aluminum element with a mass percentage greater than or equal to 90%.

29. The battery cell (61) according to any one of claims 21 to 28, wherein the positive electrode active material (111b) comprises at least one of a sodium-containing layered transition metal oxide, a sodium-containing phosphate, and a Prussian blue analog.

30. A battery (60), comprising:
the battery cell (61) according to any one of claims 1 to 29.

31. A power consuming apparatus, comprising:
the battery (60) according to claim 30.
